# EUROPEAN PATENT APPLICATION

(11) **EP 2 141 713 A1**
(43) Date of publication of application: **06.01.2010**
(21) Application number: 08739617.2
(22) Date of filing: 26.03.2008
(51) Int. Cl.: H01G 9/058, B02C 17/14, B02C 17/16

(54) **METHOD FOR PRODUCING LIQUID DISPERSION OF SOLID FINE PARTICLE, METHOD FOR PRODUCING ELECTRODE AND METHOD FOR MANUFACTURING ELECTRIC DOUBLE LAYER CAPACITOR**

(30) Priority: 27.03.2007 JP 2007081167
(71) Applicant: Sumitomo Chemical Company, Limited, Tokyo 104-8260 (JP)
(72) Inventor: EGUCHI, Hironori, Chiba 299-0125 (JP); SAKAYA, Taiichi, Chiba 266-0031 (JP); SHIBUTA, Takumi, St. Paul, Minnesota 55108 (US)
(74) Representative: Vossius & Partner
(86) International application number: PCT/JP2008/056504
(87) International publication number: WO 2008/123527

(57) **Abstract**

Disclosed is a method for producing a dispersion liquid of solid particulates, the method comprising subjecting a mixture liquid comprising charged particles, solid particles greater in average particle diameter than the charged particles, and a liquid medium to pulverization. Moreover, a method for producing an electrode and a method for producing an electric double layer capacitor using the aforementioned method.

## Description

### TECHNICAL FIELD

The present invention relates to a method for producing a dispersion liquid of solid particulates. Furthermore, the present invention relates to a method for producing an electrode, and a method for producing an electric double layer capacitor.

### BACKGROUND ART

A wet pulverization treatment method in which a slurry obtained by premixing particles and a liquid medium is subjected to pulverization using a medium stirring mill has conventionally been known as a method for pulverizing particles for using the particles as ink, paint or a coating material. When reducing a particle size by pulverizing particles using the wet pulverization treatment method, it is necessary, for example, to drive a medium stirring mill in circulation for a long period of time or to link a plurality of medium stirring mills. However, when pulverizing particles by the driving of a medium stirring mill in circulation for a long period of time or the linking of a plurality of medium stirring mills, excessively finely pulverized particulates are formed and, as a result, particles may cohere by the action of the particulates. For example, JP 7-51590 A discloses, as an example of a method for solving this problem, a wet dispersion pulverization method including a premixing step of mixing and dispersing a solid powder and a liquid to form a slurry, a step of finely pulverizing the slurry with a medium stirring mill, and a step of pulverizing the slurry through application of changes of shear force and pressure using a continuous disperser, this step being performed between the aforesaid steps.

However, this method is not a method of preventing generated particulates from cohering but a method of preventing particles from cohering by inhibiting the generation of unnecessary particulates due to excessive pulverization. Therefore, there was a limit in the size of particulates that can be produced by pulverization. The object of the present invention is to provide a method for producing a dispersion liquid of solid particulates in which generated solid particulates are dispersed in a liquid medium without cohering.

### DISCLOSURE OF THE INVENTION

One embodiment of the present invention is a method for producing a dispersion liquid of solid particulates, the method comprising subjecting a mixture liquid comprising charged particles, solid particles greater in average particle diameter than the charged particles, and a liquid medium to pulverization.

Another embodiment of the invention is a method for producing a dispersion liquid of carbon particulates, the method comprising subjecting a mixture liquid comprising silica particles, carbon particles greater in average particle diameter than the silica particles, and a liquid medium to pulverization.

Still another embodiment of the present invention is a method for producing an electrode comprising a current collector and an electrode film laminated on the current collector, wherein the method comprises the following steps and is an application of the aforementioned method for producing a dispersion liquid of a solid particulates:
(1) a step of subjecting a mixture liquid comprising silica particles, carbon particles greater in average particle diameter than the silica particles, and a liquid medium to pulverization to produce a dispersion liquid of carbon particulates,
(2) a step of applying the dispersion liquid onto a current collector to form a dispersion liquid film, and
(3) a step of removing the liquid medium from the dispersion liquid film to form an electrode film comprising the carbon particulates and the silica particles on the current collector.

Still another embodiment of the present invention is a method, which is also an application of the aforementioned method for producing a dispersion liquid of solid particulates, comprising steps of arranging two electrodes each having a current collector and an electrode film laminated on the current collector, and a separator so that the electrode films may be opposed to each other and the electrode films may be separated by the separator, winding or laminating the electrodes with intervention of the separator between the electrode films, and enclosing the electrodes and the separator wound or laminated in a metal case together with an electrolytic solution, wherein the method further comprises the following steps for producing each of the electrodes:
(1) a step of subjecting a mixture liquid comprising silica particles, carbon particles greater in average particle diameter than the silica particles, and a liquid medium to pulverization to produce a dispersion liquid of carbon particulates,
(2) a step of applying the dispersion liquid onto a current collector to form a dispersion liquid film, and
(3) a step of removing the liquid medium from the dispersion liquid film to form an electrode film comprising the carbon particulates and the silica particles on the current collector to obtain an electrode.

### MODE FOR CARRYING OUT THE INVENTION

Preferred embodiments of the present invention are described below.

The present invention is directed to a method for producing a dispersion liquid of solid particulates, the method comprising subjecting a mixture liquid comprising charged particles, solid particles greater in average particle diameter than the charged particles, and a liquid medium to pulverization. In the present invention, as to a mixture containing charged particles, solid particles, and a liquid medium, a mixture before being subjected to pulverization treatment is called a "mixture liquid" and a mixture after being subjected to the pulverization treatment is called a "dispersion liquid."

In the present invention, charged particles are particles that have a positive or negative charge in a liquid medium. Examples of the charged particles include colloid particles and metal particles.

In the present invention, the composition of the solid particles is not particularly limited. That is, the solid particles may be charged particles. In other words, the mixture liquid in the present invention may be one that contains at least two kinds of solid particles different in average particle diameter and a liquid medium, wherein particles smallest in average particle diameter among the solid particles are charged particles. When the solid particles are charged particles, the mixture liquid in the present invention is a liquid that contains two kinds of charged particles different in average particle diameter. Hereinafter, the term "charged particles" means charged particles contained in the mixture liquid which are smallest in average particle diameter. The term "solid particles" means particles other than the aforementioned charged particles.

In the present invention, charged particles and solid particles that are greater in average particle diameter than the charged particles are used. The average particle diameter of charged particles and the average particle diameter of solid particles are each a value measured by particle size analysis by a laser diffraction-scattering method or an image analysis method. When a mixture liquid containing charged particles, solid particles larger in average particle diameter than the charged particles, and a liquid medium is subjected to pulverization, the charged particles smallest in average particle diameter substantially are not pulverized and substantially only the solid particles are pulverized to become solid particulates. In the present invention, solid particles before pulverization are called "solid particles" and solid particles after the pulverization are called "solid particulates." Usually, the average particle diameter of solid particulates is smaller than the average particle diameter of solid particles before pulverization, but it is larger than the average particle diameter of charged particles. Generally, solid particulates are prone to cohere in a liquid medium. It is presumed, however, that if charged particles and solid particles lager in average particle diameter than the charged particles are subjected to pulverization while being caused to exist together in a liquid medium as in the present invention, the charged particles adhere to generated solid particulates to exhibit an effect of inhibiting the cohesion of solid particulates in a dispersion liquid. Therefore, when two or more kinds of particles different in average particle diameter are mixed, the effect of the present is exhibited at least if the particles smallest in average particle diameter are charged particles.

From the viewpoint of adhesion force between solid particulates and charged particles, the charged particles to be used for the present invention preferably has an average particle diameter being 1/10 or less, more preferably 1/50 or less of the average particle diameter of the solid particulates. From the viewpoint of improvement in adhesion force, it is desirable that the average particle diameter of the charged particles be within the range of from 1 nm to 100 nm, and moreover, it is desirable that the average particle diameter of the solid particles be within the range of from 10 nm to 10 µm.

From the viewpoint of the dispersibility of the solid particulates in the formed dispersion liquid, it is desirable that the mixture liquid contain 100 parts by weight of the solid particles and 10 to 70 parts by weight of the charged particles. Moreover, it is desirable that the total amount of the solid particles and the charged particles in the mixture liquid be 25 to 50 parts by weight per 100 parts by weight of the liquid medium.

As to the solid particles, two or more kinds of solid particles which are different in composition but are the same in average particle diameter may be used together. It is also permissible to use two or more kinds of solid particles which are the same or different in composition and are different in average particle diameter. In the latter case, the average particle diameter of the solid particles shall be the average particle diameter of solid particles having the largest average particle diameter. For example, when solid particles A having an average particle diameter Da, solid particles B having an average particle diameter Db, and solid particles C having an average particle diameter Dc are used together, provided that Da<Db<Dc, the average particle diameter of the solid particles in the present invention is Dc.

Moreover, in the present invention, two or more kinds of charged particles which are different in composition but the same in average particle diameter may be used as charged particles.

The liquid medium in the present invention is not particularly restricted. From the easiness to remove the liquid medium after the application of the dispersion liquid or the safety in handling of the dispersion liquid, it is desirable to used water, an alcohol, or a mixed medium of water and an alcohol as the liquid medium, and it is most desirable to use water.

Examples of the device to be used in the present invention for subjecting the mixture liquid to pulverization include pulverizing devices which are used generally for wet pulverization, such as a ball mill and a vibration mill. When pulverization is performed by using a ball mill or a vibration mill, the balls or the vessel is not particularly restricted and may be selected appropriately depending upon the average particle diameter of the intended solid particulates.

In the present invention, a dispersion liquid of solid particulates obtained by using carbon particle as the solid particles and silica particles as the charged particles can be used suitably for the production of electrode films. Electrode films are required to have a large electrostatic capacitance. A larger surface area of carbon particles results in a greater electrostatic capacitance of an electrode film. In the present invention, in a dispersion liquid of solid particulates obtained by using carbon particle as solid particles and silica particles as charged particles, carbon particulates are inhibited from cohering together in the dispersion liquid and, therefore, the carbon particulates has a large surface area. Therefore, an electrode film having a great electrostatic capacitance can be obtained by using a dispersion liquid of solid particulates obtained by the method of the present invention. Hereafter, a more detailed description is made to a case of producing an electrode and an electric double layer capacitor by using the method of the present invention for producing a dispersion liquid of solid particulates.

In producing an electrode and an electric double layer capacitor, carbon particles are used as the solid particles. The carbon particles are particles made of only carbon or substantially only carbon, and examples thereof include activated carbon, carbon black, such as acetylene black and Ketchen black, graphite, carbon nanotubes, and carbon nanospheres. The carbon particles may be composed of either a single kind of carbon particles or a mixture of two or more kinds of carbon particles. Activated carbon, which has a large specific surface area, is preferably used. It is preferable that the carbon particles contain activated carbon having a specific surface area of 1000 m²/g or more.

As the charged particles, silica particles are used preferably, and in particular, an aqueous colloid of particles of silica or its hydrate, namely colloidal silica, is used preferably. Silica particles not only inhibit carbon particulates from cohering together in a dispersion liquid, but also serve as a binder that sticks carbon particulates to each other or carbon particulates to a current collector when a dispersion liquid of the carbon particulates is applied to the current collector to form a dispersion liquid film and then a liquid medium is removed from the dispersion liquid film to form an electrode film. In conventional electrode films, an organic binder, such as resin, has been needed in the electrode films in order to stick carbon particles to each other or carbon particles to a current collector. In the present invention, a large electrostatic capacitance is achieved by sticking carbon particulates to each other or carbon particulates to a current collector with silica particles instead of the conventional organic binders.

The method for producing an electrode having a current collector and an electrode film laminated on the current collector, which method is one embodiment of the present invention, includes the following steps (1) to (3):
(1) a step of subjecting a mixture liquid comprising silica particles, carbon particles greater in average particle diameter than the silica particles, and a liquid medium to pulverization to produce a dispersion liquid of carbon particulates,
(2) a step of applying the dispersion liquid onto a current collector to form a dispersion liquid film, and
(3) a step of removing the liquid medium from the dispersion liquid film to form an electrode film comprising the carbon particulates and the silica particles on the current collector.

First, a dispersion liquid of carbon particulates is prepared by using the aforementioned method for production a dispersion liquid of solid particulates. For subsequent application of the dispersion liquid to a current collector, applicators, such as handy film applicators, bar coaters, and die coaters, may be used. The liquid medium is then removed from the formed dispersion film, so that an electrode film comprising the carbon particulates and the silica particles is formed on the current collector. As to the method for removing the liquid medium, it is desirable, from the viewpoint of enhancement of the force binding carbon particulates, to perform drying at 50 to 80°C for 10 to 30 minutes first, and then perform drying at 100 to 200°C for 1 to 60 minutes. In order to adjust the thickness of the electrode film, the electrode film may be pressed after being formed on the current collector.

The current collector is usually a foil of metal, and examples of the metal include aluminum, copper and iron. In particular, aluminum is preferred because it is light and low in electric resistance. As to the form of the current collector, the current collector is preferably in the form of a film having a thickness that is within the range of 20 µm to 100 µm because it is easy to manufacture a wound electrode or a laminated electrode therefrom. In order to improve the adhesiveness between the current collector and the electrode film, it is preferable that the surface of the current collector be roughened by etching or the like.

The electrode produced by the method of the present invention can be used as electrodes of dry batteries, primary batteries, secondary batteries, redox capacitors, hybrid capacitors, electric double layer capacitors, etc., and it is particularly suitable as a constituent of an electric double layer capacitor. Examples of an electric double layer capacitor include a capacitor in which a separator is disposed between two electrodes and an electrolytic solution is filled in between the separator and each of the electrodes, and a capacitor in which a solid electrolyte (gel electrolyte) is filled in between two electrodes.

By charging, a positive electrode is charged in plus (+), so that a negative electrolyte forms an electrical double layer at the interface of the positive electrode, and at the same time, a negative electrode is charged in minus (-), so that a positive electrolyte forms an electrical double layer at the interface of a negative electrode. As a result, electrical energy is stored. Even if the charging is stopped, the electric double layers are maintained. When, discharging is performed, the electric double layers are eliminated, so that electric energy is released.

While an electric double layer capacitor may be a cell having two electrodes, that is, a pair of a positive electrode and a negative electrode, it may be a capacitor having two or more such cells.

One embodiment of the present invention is a method for producing an electric double layer capacitor, wherein the method comprises disposing two electrodes, each comprising a current collector and an electrode film laminated on the current collector, and a separator to render the electrode films confronted each other and separated with the separator, winding or laminating the electrodes with the separator intervening the electrode films, and then enclosing the wound or laminated electrodes and the separator together with an electrolyte solution into a metal case, wherein the method further comprising the following steps (1) to (3) for preparing each of the laminated electrodes.
(1) a step of subjecting a mixture liquid comprising silica particles, carbon particles greater in average particle diameter than the silica particles, and a liquid medium to pulverization to produce a dispersion liquid of carbon particulates,
(2) a step of applying the dispersion liquid onto a current collector to form a dispersion film, and
(3) a step of removing the liquid medium from the dispersion film to form an electrode film comprising the carbon particulates and the silica particles on the current collector to obtain an electrode.

Specific examples of the electric double layer capacitor produced by the method of the present invention include a coin-shaped capacitor produced by arranging two disc-shaped electrodes and a separator so that the electrode films of the electrodes may face each other and the electrode films may be separated by the separator, laminating the electrodes and the separator together while placing the separator between the electrode films, and then enclosing them within a coin-shaped case together with an electrolytic solution; a cylindrical capacitor produced by arranging two sheet-shaped electrodes and a separator so that the electrode films of the electrodes may face each other and the electrode films may be separated by the separator, winding the electrodes and the separator together while placing the separator between the electrode films, and then enclosing them within a cylindrical case together with an electrolytic solution; laminated capacitors comprising film-like electrodes and a separator laminated together; and bellows-shaped capacitors.

A mixture of an electrolyte and a solvent may be used as the electrolytic solution. The electrolyte is not particularly restricted and it may be either an inorganic electrolyte or an organic electrolyte. An inorganic electrolyte is used usually in the form of an electrolytic solution after being mixed with water. An organic electrolyte is used usually in the form of an electrolytic solution after being mixed with a solvent containing an organic polar solvent as a main component.

An insulating film having a high ion transmittance and a predetermined mechanical strength is used as the separator. Specific examples include papers of natural fibers, such as natural cellulose and Manila hemp; papers of regenerated fibers or synthetic fibers, such as rayon, vinylon, and polyester; mixed papers made by mixing natural fibers with regenerated fibers or synthetic fibers; nonwoven fabrics, such as polypropylene nonwoven fabric, polyester nonwoven fabric, and a polybutylene terephthalate nonwoven fabric; porous films, such as porous polyethylene, porous polypropylene, and porous polyester; resin films, such as para wholly aromatic polyamide and fluorine-containing resins, e.g., vinylidene fluoride, tetrafluoroethylene, copolymers of vinylidene fluoride and propylene hexafluoride, fluororubber.

### [Examples]

The present invention is described more concretely below with reference to examples, but the invention is not limited to the examples.

### [Example 1]

Activated carbon granulated to have an average particle diameter of 1 to 2 mm (PR-15 produced by Kuraray Chemical, Inc.) and acetylene black having an average particle diameter of 36 nm (DENKA BLACK, produced by Denki Kagaku Kogyo Kabushiki Kaisha) were used as solid particles. Colloidal silica "SNOWTEX ST-XS" produced by Nissan Chemical Industries, Ltd. was used as charged particles. This is an aqueous colloid of silica particles with an average particle diameter of 4 to 6 nm (solid concentration = 20% by weight).

A mixture liquid with a solid concentration of 25 wt% was prepared by adding 12.5 g of the colloidal silica to 5.0 g of the activated carbon and 0.625 g of the acetylene black, and further adding pure water. The mixture liquid and alumina balls having a diameter of 15 mm were placed into a 1-liter pulverizing vessel and were subjected to pulverization for 24 hours. The composition of the thus-prepared carbon particulate dispersion liquid included 5 g of activated carbon, 0.625 g of acetylene black, and 2.5 g of silica. That is, the amount of the silica particles per 100 parts by weight of carbon particles was 44.4 parts by weight. On each of two 20-µm thick aluminum foils, a dispersion liquid film was formed by applying the aforementioned dispersion liquid with a handy film applicator. Then, water was removed by heating at 60°C for 10 minutes and further heating at 150°C for 1 hour. Thus, electrodes were obtained each having an electrode film laminated on a current collector. The electrode films each had a thickness of 60 µm after being dried.

The two electrodes obtained were each cut into a size of 1.5 cm x 2.0 cm. They were fully dried and then were assembled within a glove box into an electric double layer capacitor shown in Fig. 1 by using stainless steel as a current collector. The two electrodes were arranged so that their electrode films might face each other and were laminated while a natural cellulose paper was placed as a separator between the electrode films. These components were enclosed together with an electrolytic solution, LIPASTE-P/TEMAF 14N, produced by Takayama Chemical Industries, Ltd. into an aluminum case, to obtain an electric double layer capacitor.

The resulting electric double layer capacitor was charged at a constant current of 300 mA/g until the voltage reached 2.8 V, and then was discharged at a constant current until the voltage became 0 V at the same constant current of 300 mA/g. Thus, the electrostatic capacitance was measured. The result is shown in Table 1.

### [Comparative Example 1]

Activated carbon and acetylene black were used as solid particles. A product obtained by pulverizing RP-15 produced by Kuraray Chemical Co. , Ltd. with a ball mill for 18 hours was as the activated carbon. The pulverized activated carbon had an average particle diameter of 8 µm, which was measured with a laser diffraction/saattering particle size distribution analyzer (HORIBA Lea-910) by using water as a medium. DENKA BLACK produced by Denki Kagaku Kogyo Kabushiki Kaisha (average particle diameter = 36 nm) was used as the acetylene black. Colloidal silica "SNOWTEX ST-XS" produced by Nissan Chemical Industries, Ltd. was used as charged particles.

A mixture liquid with a solid concentration of 25 wet% was prepared by adding 12.5 g of the colloidal silica to 5.0 g of the activated carbon and 0.625 g of the acetylene black, and further adding pure water, followed by mixing. The composition of the prepared dispersion liquid included 5 g of activated carbon, 0.625 g of acetylene black, and 2.5 g of silica. That is, the amount of the silica particles per 100 parts by weight of carbon particles was 44.4 parts by weight. Electrodes were produced in the same manner as in Example 1 except for applying the mixture liquid to a current collector. Then, an electric double layer capacitor was assembled and the electrostatic capacitance was measured. The result is shown in Table 1.

### [Comparative Example 2]

A mixture liquid was prepared in the same manner as in Comparative Example 1 except for using polytetrafluoroethylene (henceforth, PTFE) (PTFE 30-J, produced by Du Pont-Mitsui Fluorochemicals Co., Ltd.) having a solid concentration of 63 wt% instead of the colloidal silica as charged particles. The composition of the prepared mixture liquid included 5.0 g of activated carbon, 0.625 g of acetylene black, and 0.625 g of PTFE. That is, the amount of the PTFE per 100 parts by weight of carbon particles was 11.1 parts by weight. Next, electrodes were produced in the same manner as in Example 1 except for applying the mixture liquid to a current collector. Then, an electric double layer capacitor was assembled and the electrostatic capacitance was measured. The result is shown in Table 1.

**Table 1**

| | Activated carbon Amount Average particle diameter | Acetylene black Amount | Charged particle Amount Average particle diameter | Method of producing dispersion liquid | Electrostatic capacitance [F/g] |
|---|---|---|---|---|---|
| Example 1 | Granulated activated carbon | | Granular silica | *1 | 35.2 |
| | 5 g | 0.625 g | 2.5 g | | |
| | 1-2 mm | | 4 - 6 nm | | |
| Comparative Example 1 | Pulverized activated carbon | | Granular silica | *2 | 27.2 |
| | 5 g | 0.625 g | 2.5 g | | |
| | 8 µm | | 4-6 nm | | |
| Comparative Example 2 | Pulverized activated carbon | | PTFE | *2 | 22.3 |
| | 5 g | 0.625 g | 0.625 g | | |
| | 8 µm | | | | |

| | | | | | |
|---|---|---|---|---|---|
| *1: Pulverizing mixture liquid *2: Mixing pulverized activated carbon | | | | | |

Example 1 , in which electrodes were produced by using a dispersion liquid obtained by pulverizing a mixture liquid containing activated carbon, silica particles, and water, exhibited a larger electrostatic capacitance in comparison to Comparative Example 1, in which electrodes were produced by using a dispersion liquid obtained by mixing activated carbon pulverized beforehand with a mixture liquid containing silica particles and water. This means that the surface area of the carbon particulates in the electrodes of Example 1 is larger than the surface area of the carbon particles in the electrodes of Comparative Example 1 and Comparative Example 2.

### INDUSTRIAL APPLICABILITY

The solid particulate dispersion liquid obtained by the production method of the present invention is a dispersion liquid of solid particulates in which the generated solid particulates are dispersed in a liquid medium without cohering together. The carbon particulates dispersion liquid obtained by this method is **characterized in that** the carbon particulates in the dispersion liquid have a large surface area because the carbon particulates do not cohere together. By using such a carbon particulate dispersion liquid for the production of an electrode film, an electrode film with a large electrostatic capacitance can be formed. An electrode in which such an electrode film is laminated on a current collector is also an electrode having a large electrostatic capacitance. Furthermore, an electric double layer capacitor having such an electrode also has a large electrostatic capacitance.

## Claims

1. A method for producing a dispersion liquid of solid particulates, the method comprising subjecting a mixture liquid comprising charged particles, solid particles greater in average particle diameter than the charged particles, and a liquid medium to pulverization.

2. The method of claim 1, wherein the average particle diameter of the charged particles is 1/10 or less of the average particle diameter of the solid particulates.

3. The method of claim 1 or 2, wherein the average particle diameter of the charged particles is within the range of from 1 nm to 100 nm.

4. The method of any one of claims 1 to 3, wherein the average particle diameter of the solid particulates is within the range of from 10 nm to 50 µm.

5. The method of any one of claims 1 to 4, wherein the solid particles are carbon particles.

6. The method of any one of claims 1 to 5, wherein the charged particles are silica particles.

7. The method of any one of claims 1 to 6, wherein the mixture liquid contains 100 parts by weight of the solid particles and 10 to 70 parts by weight of the charged particles.

8. A method for producing a dispersion liquid of carbon particulates, the method comprising subjecting a mixture liquid comprising silica particles, carbon particles greater in average particle diameter than the silica particles, and a liquid medium to pulverization.

9. A method for producing an electrode comprising a current collector and an electrode film laminated on the current collector, wherein the method comprises the following steps:
(1) a step of subjecting a mixture liquid comprising silica particles, carbon particles greater in average particle diameter than the silica particles, and a liquid medium to pulverization to produce a dispersion liquid of carbon particulates,
(2) a step of applying the dispersion liquid onto a current collector to form a dispersion film, and
(3) a step of removing the liquid medium from the dispersion film to form an electrode film comprising the carbon particulates and the silica particles on the current collector.

10. A method comprising steps of arranging two electrodes each having a current collector and an electrode film laminated on the current collector, and a separator so that the electrode films may be opposed to each other and the electrode films may be separated by the separator, winding or laminating the electrodes with intervention of the separator between the electrode films, and enclosing the electrodes and the separator wound or laminated in a metal case together with an electrolytic solution, wherein the method further comprises the following steps for producing each of the electrode:
wherein the method further comprises the following steps for producing each of the electrode:
(1) a step of subjecting a mixture liquid comprising silica particles, carbon particles greater in average particle diameter than the silica particles, and a liquid medium to pulverization to produce a dispersion liquid of carbon particulates,
(2) a step of applying the dispersion liquid onto a current collector to form a dispersion film, and
(3) a step of removing the liquid medium from the dispersion film to form an electrode film comprising the carbon particulates and the silica particles on the current collector to obtain an electrode.
